# FASCICULE DE BREVET EUROPEEN

(11) **EP 2 338 759 B1**
(45) Date de publication et mention de la délivrance du brevet: **17.04.2013**
(21) Numéro de dépôt: 10190467.0
(22) Date de dépôt: 09.11.2010
(51) Int. Cl.: B61B 1/02, B61L 23/00, B61L 23/04

(54) **Dispositif de prévention et de détection de la chute d'un objet sur une voie ferroviaire, et procédé de détection de la chute d'un objet sur la voie**
Vorrichtung zum Verhindern und Erkennen eines fallenden Objektes auf der Schiene, und Verfahren zum Erkennen eines fallenden Objektes auf der Schiene
Device for preventing and detecting the falling of an object on a railway line, and method for detecting the falling of an object on the line

(30) Priorité: 26.11.2009 FR 0958420
(43) Date de publication de la demande: 29.06.2011
(73) Titulaire: ALSTOM Transport SA, 92300 Levallois-Perret (FR)
(72) Inventeur: Vacher, Charlie, 92600 Asnières sur Seine (FR); Carnot, Michel, 92500, Rueil-Malamaison (FR)

(56) Documents cités:
- EP-A1- 1 911 656
- WO-A1-98/41432
- WO-A1-2005/007479
- WO-A1-2005/102808
- DE-U1- 20 020 009

## Description

La présente invention se rapporte à un dispositif de prévention et de détection de la chute d'un objet dans une zone surveillée, et en particulier sur une voie ferroviaire de circulation, ainsi qu'à un procédé de détection de la chute d'un objet sur la voie.

Le document DE-U-200 20 009 décrit un dispositif conforme au préambule de la revendication 1.

Pour détecter la chute d'un objet sur une voie ferroviaire, par exemple dans une station de métro, il est connu d'utiliser une caméra vidéo placée au-dessus des voies. Cette solution n'est cependant pas totalement satisfaisante car elle nécessite des opérations d'installation et d'entretien importantes et coûteuses, et ne fonctionne pas correctement en cas de masquage de l'angle de vue de la caméra.

Une autre solution connue est de disposer une pluralité de diodes électroluminescentes le long de la voie de circulation, par exemple une diode tous les 25 cm. Les diodes émettent des faisceaux dont on peut détecter l'interruption. Cette solution nécessite un grand nombre de diodes et de détecteurs, ce qui implique également des opérations d'installation et d'entretien importantes et coûteuses.

Une autre solution connue pour empêcher la chute d'objets ou de personnes est de disposer sur toute la longueur du quai un système de portes palières, présentant une alternance de barrières physiques fixes et de portes mobiles dans des zones d'ouverture de porte prévues pour coïncider avec les portes d'un train arrêté au quai, l'ouverture des portes du train commandant l'ouverture des portes palières du quai. Cette solution présente l'inconvénient de nécessiter un grand nombre d'équipements comprenant des moteurs et des câbles pour ouvrir les portes palières, nécessitant également des opérations d'installation et d'entretien importantes et coûteuses.

L'invention a pour but de fournir un dispositif de prévention et de détection de chute d'un objet dans une zone de détection d'une voie ferroviaire, qui ne présente pas au moins certains des inconvénients précités de l'art antérieur.

Pour cela, l'invention fournit un dispositif de prévention et de détection de la chute d'un objet ou d'une personne sur une voie d'une station ferroviaire comportant un quai, comprenant au moins un dispositif de détection comportant au moins un émetteur d'un rayon et un capteur apte à détecter ce rayon, et un calculateur de détection pour traiter les signaux issus des capteurs et apte à communiquer en sécurité avec au moins un système de signalisation de la station. Ce dispositif comprend des barrières aptes à être disposées sur le quai pour la prévention des chutes, les barrières délimitant entre elles des zones d'ouvertures de porte, un dispositif de détection étant disposé dans chacune d'entre elles pour détecter une chute sur la voie.

Le dispositif selon l'invention présente également de préférence au moins une des caractéristiques ci-dessous :
- les sorties des capteurs sont connectées à au moins un port d'entrée du calculateur de détection, qui est soit dans un état « activé » dans lequel les signaux issus des capteurs sont traités, soit dans un état « désactivé » dans lequel les signaux issus des capteurs ne sont pas traités,
- le dispositif comprend au moins un dispositif de détection d'entrée en station apte à être disposé dans au moins une zone du quai fermée par une barrière,
- le dispositif de détection d'entrée en station comprend au moins un émetteur d'un rayon et une pluralité de capteurs aptes à détecter ce rayon, les capteurs étant disposés sur au moins toute la longueur de la zone d'ouverture de portes,
- les sorties des capteurs du dispositif de détection d'entrée en station sont connectées à au moins un port d'entrée du calculateur de détection,
- le calculateur de détection est apte à traiter le signal issu des capteurs du dispositif de détection d'entrée en station pour modifier l'état du port d'entrée,
- le calculateur de détection est apte à traiter une information sur la position d'un véhicule circulant sur la voie pour modifier l'état du port d'entrée,
- le calculateur de détection est apte à interdire ou autoriser l'entrée en station d'un véhicule en fonction de l'état du port d'entrée et des signaux émis par les capteurs du dispositif de détection de chute, au moyen d'une information envoyée au système de signalisation,
- le calculateur de détection est connecté à un dispositif de contrôle de l'alimentation en énergie de la station et apte à ordonner la coupure de l'alimentation en énergie de la station en fonction de l'état du port d'entrée et des signaux émis par les capteurs du dispositif de détection de chute, au moyen d'une information envoyée audit dispositif de contrôle de l'alimentation en énergie,

L'invention concerne également un procédé de détection de la chute d'un objet ou d'une personne sur une voie d'une station ferroviaire comportant un quai comprenant un dispositif de prévention et de détection selon l'invention, comprenant les étapes consistant à
- détecter la coupure d'au moins un rayon d'au moins un dispositif de détection de chute,
- émettre en sécurité une information d'interdiction d'entrée en station à au moins un système de signalisation à la voie ou embarqué,
- envoyer une alarme à un système de signalisation central.

Le procédé selon l'invention comprend également de préférence au moins une des étapes ci-dessous :
- une étape de coupure de l'alimentation en énergie de la station,
- une étape de détection de l'approche d'un véhicule de la station,
- une étape dans laquelle le calculateur de détection modifie l'état des ports d'entrée quand l'approche d'un véhicule est détecté, de manière à ne plus traiter les signaux de coupure d'au moins un rayon émis par au moins un capteur du dispositif de détection de chute.

D'autres buts, caractéristiques et avantages de l'invention apparaîtront à la lecture de la description des modes de réalisation de l'invention, description faite en liaison avec les dessins dans lesquels:
- la figure 1 est une vue schématique d'une partie du dispositif de prévention et de détection quand un véhicule est à quai,
- la figure 2 est une vue schématique de dessus du dispositif de prévention et de détection quand un véhicule est en entrée de station,
- les figures 3a et 3b sont des représentations schématiques de deux modes de réalisation du dispositif, prises en coupe selon l'axe lll-lll de la figure 2,
- la figure 3c est une vue schématique en coupe d'un 3^{ème} mode de réalisation de l'invention,
- la figure 4 est une vue schématique du dispositif selon l'invention intégré dans un système de signalisation d'une voie ferroviaire.

Pour faciliter la lecture des dessins, seuls les éléments nécessaires à la compréhension de l'invention ont été représentés. Les mêmes éléments portent les mêmes références d'un dessin à l'autre.

Dans la description, les termes « vertical » et « horizontal » sont définis par rapport au quai d'une station ferroviaire. Ainsi, un plan horizontal est sensiblement parallèle au plan dans lequel s'étend le quai et le plan vertical est sensiblement perpendiculaire au plan horizontal. Le terme « longitudinal » est défini par rapport à la direction dans laquelle circule un véhicule ferroviaire dans un plan horizontal et le terme « transversal » est défini selon une direction sensiblement perpendiculaire à la direction longitudinale dans un plan horizontal.

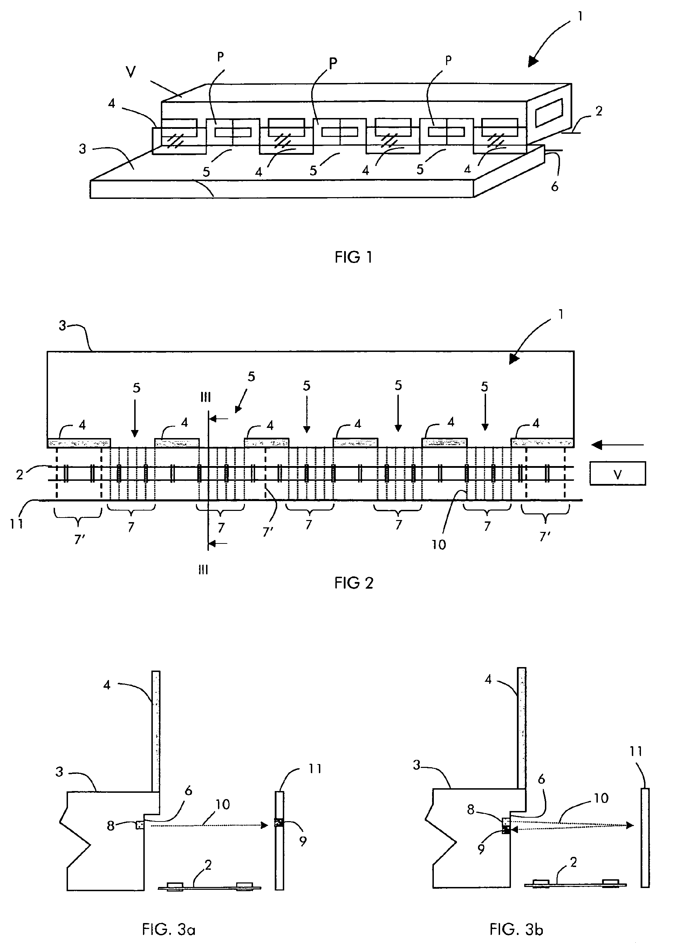

En référence aux figures 1 et 2, le dispositif de prévention et de détection de chute 1 d'un objet ou d'une personne sur une voie ferroviaire 2 d'une station de métro comportant un quai 3 comprend des barrières physiques 4 disposées sur certaines zones du quai 3, délimitant entre elles des zones dites zones d'ouvertures de portes 5. Celles-ci sont disposées de manière à coïncider avec les portes P d'un véhicule ferroviaire V arrêté en station. Les barrières 4 sont rigidement fixées sur le quai, au plus près du rebord 6 du quai 3. Elles comportent éventuellement un retour transversal empêchant à quiconque de pénétrer dans l'espace compris entre le rebord 6 du quai 3 et la barrière 4. Les barrières 4 sont par exemple des baies vitrées ou des portes vitrées maintenues dans un cadre rigide fixe par rapport au quai, des murets ou toute autre construction fixe par rapport au quai 3 et de hauteur suffisante pour empêcher qu'une personne ne tombe du quai sur la voie 2.

Ainsi, les barrières 4 ne sont pas mobiles par rapport au quai 3, bien qu'elles puissent comporter des éléments mobiles, notamment pour permettre une évacuation d'urgence. Par exemple, les barrières peuvent comporter des portes équipées de barres anti-panique disposées sur la face orientée vers la voie, qui ne peuvent être actionnées que par des passagers embarqués à bord d'un véhicule dont les portes sont arrêtées par erreur devant les barrières. En fonctionnement normal, les portes ne s'ouvrent pas car ni les passagers sur le quai ni les passagers dans le véhicule n'ont accès aux systèmes d'ouverture de telles portes.

Les barrières 4 constituent ainsi le dispositif de prévention du système selon l'invention, sur une partie de la longueur du quai 3.

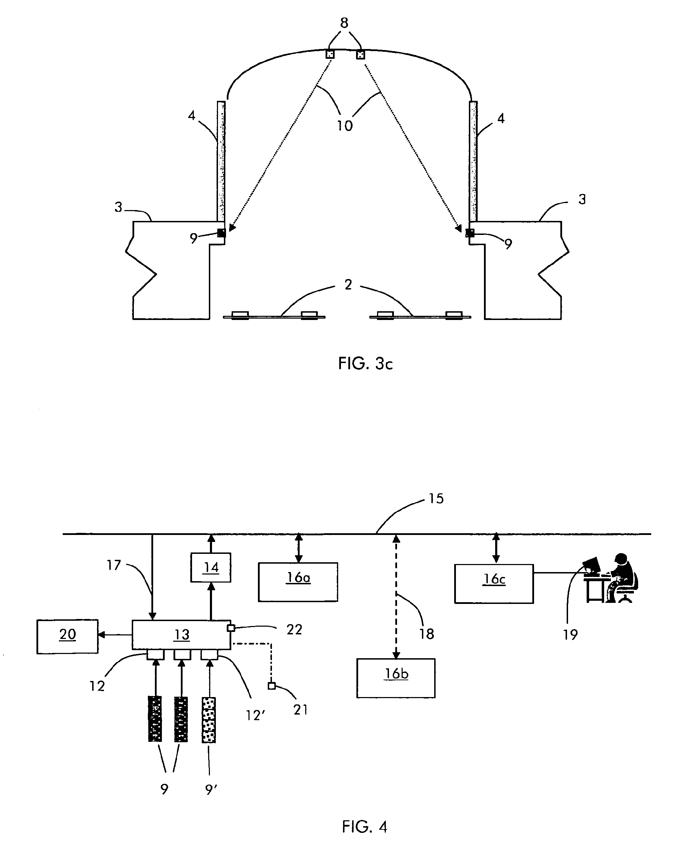

En référence aux figures 2, 3a et 3b, le dispositif de prévention et de détection de chute 1 comprend également un dispositif de détection de chute 7 disposé dans chaque zone d'ouverture de portes 5. Chaque dispositif de détection de chute 7 est constitué d'une série d'émetteurs 8 et de capteurs 9 - un capteur 9 étant associé à un émetteur 8 - disposés tous les 5 à 30 cm, et de manière préférentielle, tous les 10 à 20 cm, sous le rebord 6 du quai 3, de manière à couvrir au moins toute la longueur de la zone d'ouverture de porte 5. Préférentiellement, les capteurs 9 couvrent également une petite partie du quai 3, de chaque côté de la zone d'ouverture de porte 5 afin de détecter une chute très proche des barrières 4. Le choix de l'espacement des émetteurs et capteurs est un compromis entre la taille des objets ou des personnes à détecter et le coût du système. Les émetteurs 8 peuvent émettre des rayons 10 infra-rouge ou radio (ou de tout autre type, indiqués en pointillés sur les figures 2, 3a, 3b et 3c), les capteurs 9 étant alors adaptés pour détecter ces rayons. Les rayons 10 émis peuvent être reçus soit directement par un capteur 9 fixé sur une paroi 11 disposée à l'opposé du quai 3 par rapport à la voie 2, soit indirectement par un capteur 9 également fixé sous le rebord 6 du quai 3, les rayons 10 étant réfléchis par la paroi 11. Lorsque la station comprend deux quais répartis de part et d'autre d'une plate-forme centrale, la paroi 11 est constituée par l'une des parois du tunnel de la station. Lorsque la station comprend deux quais en vis-à-vis, séparés par deux voies ferroviaires, la paroi 11 est disposée entre les deux voies afin de réfléchir l'onde émise 10 vers le quai 3.

En variante comme représenté par la figure 3c, un dispositif de détection de chute 7 comprend un seul émetteur 8 disposé à la verticale de la voie 2, en voûte 11 du tunnel, sensiblement dans le plan médian de la zone d'ouverture de porte 5, et une série de capteurs 9 disposée sous le rebord 6 du quai 3, dans au moins toute la zone d'ouverture de porte 5. L'émetteur 8 émet un faisceau 10 qui balaie la zone couverte par les capteurs 9.

Optionnellement, le dispositif de prévention et de détection de chute 1 comprend un ou plusieurs dispositifs de détection d'entrée en station 7' (indiqués en traits sur la figure 2) disposés dans une ou plusieurs zones du quai 3 fermées par une barrière 4. Chaque dispositif comprend au moins un émetteur 8' et un capteur 9', de même types que ceux du dispositif de détection de chute 7 et fonctionnant de la même façon. Leur fonction n'est cependant pas ici de détecter la chute d'un objet ou d'une personne sur la voie 2, mais de détecter l'entrée en station d'un véhicule V. A cet effet, un dispositif de détection d'entrée en station 7' peut ne comprendre qu'un ensemble émetteur 8' / capteur 9' ou quelques émetteurs 8' et capteurs 9', espacés d'au moins 50cm et d'au plus 10m, espacés préférentiellement d'un mètre, sous le rebord 6 du quai 3. Pour une version économique, seule une zone fermée par une barrière 4, disposée à l'extrémité du quai 2 juste en entrée de station peut être munie de ce dispositif 7'.

Enfin, comme le montre la figure 4, le dispositif de prévention et de détection de chute 1 comprend un calculateur de détection 13 disposé par exemple dans un local technique de la station, pour traiter les signaux émis par les capteurs 9 ou 9'. Les sorties des capteurs 9 d'un dispositif de détection de chute 7 sont ainsi connectées à un port d'entrée 12 du calculateur de détection 13. Les ports d'entrée 12 peuvent prendre deux états, l'un dit « activé » dans lequel les signaux issus des capteurs 9 sont traités, l'autre dit « désactivé » dans lequel les signaux issus des capteurs 9 ne sont pas traités.

Si le dispositif selon l'invention comprend un dispositif de détection d'entrée en station 7', les sorties des capteurs 9 sont connectées à un port d'entrée 12' du calculateur. Les signaux provenant de ces capteurs 9' sont toujours traités.

Ces signaux sont de deux types, selon que le capteur 9 (ou 9') détecte ou non le rayon 10 émis par l'émetteur 8. Quand le capteur 9 (ou 9') détecte un rayon 10, il envoie le signal « visible » au calculateur de détection 13. Quand le capteur 9 (ou 9') ne détecte aucun rayon 10 - par exemple parce qu'un objet a chuté sur la voie 2 ou qu'un train est à l'arrêt en station, il envoie le signal « masqué » au calculateur de détection 13.

Le calculateur de détection 13 est relié à une entrée/sortie 14 apte à transmettre en sécurité une information à un système de signalisation 16 via un moyen de communication filaire 15, par exemple un bus ethernet. Le calculateur de détection 13 comprend également un port d'entrée 17 pour recevoir des données non-vitales transmises par le moyen de communication filaire 15.

Dans l'exemple présent, le système de signalisation 16 peut comporter classiquement un ou plusieurs systèmes de signalisation à la voie 16a, un système de signalisation embarqué 16b à bord de chaque véhicule circulant sur la voie 2, et un ou plusieurs systèmes de signalisation de supervision 16c.

Les systèmes de signalisation à la voie 16a comprennent les équipements de signalisation à la voie de la station (signaux, aiguilles, balises, circuits de voie, etc...), les équipements associés pour commander ces équipements (calculateur d'enclenchement, moteurs d'aiguilles, etc...), et les équipements assurant les traitements communs à tous les trains (calculateurs traitant l'espacement, l'interface entre le système embarqué 16b et le calculateur d'enclenchement, etc...).

Chaque système de signalisation embarqué 16b comprend des moyens de communication sans fil 18 pour communiquer via le moyen de communication filaire 15 avec les systèmes de signalisation à la voie 16a et centralisés 16c, ainsi qu'avec le calculateur de détection 13. Il comprend également des moyens pour connaître sa position sur la voie.

Chaque système de signalisation de supervision 16c est relié à une interface homme-machine 19. Il gère les informations opérationnelles non-vitales du système de signalisation : état des équipements (pannes ou mal fonctions des capteurs, des émetteurs, etc), alarmes, etc. Il permet à un opérateur de donner des ordres aux différents équipements connectés au moyen de communication filaire 15 et de les piloter.

Par ailleurs, dans l'exemple d'une station de métro décrit ici, les véhicules sont alimentés en énergie par un dispositif d'alimentation disposé au sol - appelé 3^{ème} rail qui transporte par exemple une tension de 750 V - au moyen d'un patin qui frotte sur ce 3^{ème} rail. La station comporte alors un dispositif de contrôle de l'alimentation en énergie 20 qui permet de couper manuellement l'alimentation pour éviter d'électrocuter des personnes qui descendent sur les voies, par exemple pour réaliser des opérations de maintenance ou des essais. L'alimentation est rétablie également au moyen de ce dispositif de contrôle de l'alimentation en énergie 20 quand les personnes ont quitté la voie.

Dans ce cas, le calculateur de détection 13 est connecté au dispositif de contrôle de l'alimentation en énergie 20 de la station et peut communiquer en sécurité avec lui pour lui ordonner par exemple, de couper l'alimentation en énergie ou pour la rétablir.

En variante, le dispositif 1 selon l'invention peut s'appliquer à d'autres systèmes ferroviaires dans lesquels l'alimentation se fait au moyen d'une caténaire aérienne. Une personne chutant sur les voies ne risque donc pas d'être électrocutée. Si la station dispose d'un dispositif de contrôle d'alimentation en énergie 20, il n'est dans ce cas pas nécessaire de le connecter au calculateur de détection 13.

En option, le calculateur de détection 13 comprend un bouton d'alarme 21, disposé par exemple sur le quai 3 et relié au calculateur 13 par un câble (représenté en trait mixte sur la figure 4), permettant à une personne sur le quai de contrôler l'application des mêmes traitements que ceux réalisés automatiquement dans le cas de la détection de la chute d'une personne (couper l'alimentation en énergie et empêcher l'entrée du train en station). L'information d'activation du bouton d'alarme 21 déclenche des traitements identiques pour le calculateur de détection 13 à ceux réalisé en cas de détection de la chute d'un objet ou d'une personne.

Encore en option, le calculateur de détection 13 comprend un bouton de remise en marche de l'alimentation 22, dont l'accès est restreint. Il est par exemple disposé sur le calculateur dans le local technique ou à distance dans une armoire disposée sur le quai, fermée à clefs.

Le fonctionnement du dispositif de prévention et de détection de chute 1 est décrit en relation avec les figures 2, 4 et le mode de réalisation de la figure 3a.

Par défaut, les ports d'entrée 12 du dispositif de calculateur de détection 13 sont chacun dans l'état dit « activé ». En fonctionnement nominal, les émetteurs 8 émettent des rayons 10, par exemple infra-rouges, captés par les capteurs 9. Les signaux « visible » sont envoyés aux ports d'entrée 12 du calculateur de détection 13. Lorsqu'un objet ou une personne tombe sur la voie 2, dans l'une des zones d'ouverture de porte 5, un ou plusieurs rayons 10 sont interrompus et un ou plusieurs capteurs 9 envoient le signal « masqué » au calculateur de détection 13. A la réception de ce signal, le calculateur de détection 13 émet en sécurité, par l'entrée/sortie 14, une information « entrée de la station interdite » au système de signalisation à la voie 16a ou embarqué 16b. Cette information est traitée par le calculateur d'enclenchement du système de signalisation à la voie 16a, qui modifie alors l'état des équipements à la voie pour interdire à un véhicule approchant d'entrer dans la station, par exemple en passant un signal disposé à l'entrée de la station au rouge. Il peut également, au moyen d'un des équipements assurant les traitements communs à tous les trains du système de signalisation à la voie 16a, d'interdire l'entrée de la station au système de signalisation embarqué 16b et de requérir l'immobilisation au système embarqué 16b d'un train qui serait déjà en partie dans la station. Le traitement de l'information par le calculateur d'enclenchement du système de signalisation à la voie 16a présente l'avantage de ne pas présupposer que tous les trains qui circulent sur la ligne sont équipés d'un système de signalisation embarqué 16b, mais nécessite un signal à l'entrée de chaque station. Le traitement de l'information par les équipements assurant les traitements communs à tous les trains du système 16a et par le système de signalisation embarqué 16b ne nécessite pas de signaux à l'entrée de chaque station, mais présuppose que tous les trains sont équipés du système de signalisation embarqué 16b.

Simultanément, le calculateur de détection 13 émet une alarme qui s'affiche sur l'interface homme-machine 19 et qui indique à l'opérateur une chute.

Si la station comporte un 3^{ème} rail, le calculateur de détection 13 ordonne également au dispositif de contrôle de l'alimentation en énergie 20 de couper l'alimentation en énergie de la station.

De ce fait, aucun train n'entre en station, un opérateur est prévenu de la chute par une alarme et le courant est coupé, afin d'éviter toute électrocution. L'opérateur peut demander à une équipe d'intervenir et de remonter l'objet ou la personne sur le quai, et superviser l'opération par exemple à l'aide de caméras vidéo installées dans la station.

Quand l'objet ou la personne est remonté et que tout risque est écarté, l'opérateur remet l'alimentation en énergie de la station, soit manuellement au moyen du bouton de remise en marche de l'alimentation 22 soit au moyen d'une information envoyée par l'interface homme-machine 19 au calculateur de détection 13. Le calculateur de détection 13 cesse alors d'émettre l'information « entrée de la station interdite » au système de signalisation à la voie 16a. Celui-ci modifie alors l'état des équipements à la voie pour autoriser un véhicule approchant à entrer dans la station, par exemple en passant un signal disposé à l'entrée de la station au vert ou en autorisant à nouveau les mouvements des trains dans la station.

Lorsqu'un véhicule approche de la station, le calculateur de détection 13 doit être averti de l'imminence de son entrée afin de ne pas émettre de fausses alarmes ni de fausses informations « entrée en station interdite » quand le véhicule coupera les rayons 10 émis. Cet avertissement peut se réaliser de deux façons différentes, selon que le système 1 comporte ou non un dispositif de détection d'entrée en station 7'.

Lorsque le dispositif 1 selon l'invention ne comprend pas de dispositif de détection d'entrée en station 7', le calculateur de détection 13 utilise l'information de la position du véhicule V. Celle-ci est envoyée par le système de signalisation embarqué 16b sur le moyen de communication filaire 15 au moyen de la communication sans fil 18. Le calculateur de détection 13 reçoit cette information au port d'entrée 17 et la traite afin de modifier l'état de ses ports d'entrée 12 du mode « activé » au mode « désactivé ». Chacun des éléments impliqués dans la chaîne de communication (le système de signalisation embarqué 16b, le moyen de communication sans fil 18, le moyen de communication filaire 15, le calculateur de détection 13) possède un temps de cycle pour envoyer et recevoir les données. Ces temps de cycle se cumulent les uns aux autres et la somme constitue un délai appelé zone d'ombre devant le train, zone dans laquelle la position exacte du véhicule est inconnue. La zone d'ombre est de l'ordre de quelques secondes. Cette solution présente l'avantage de ne pas nécessiter de capteurs et d'émetteurs supplémentaires mais, en contre-partie, impose de changer l'état des ports d'entrée 12 quelques secondes avant que le véhicule n'entre réellement en station. Pendant ces quelques secondes, une chute ne sera pas détectée.

Lorsque le dispositif 1 selon l'invention comprend au moins un dispositif de détection d'entrée en station 7' et que le calculateur de détection 13 reçoit un signal « masquée » d'un capteur 9' du dispositif de détection d'entrée en station 7', il traite localement cette information pour changer progressivement l'état des ports d'entrée 12 des capteurs 9 des dispositifs de détection 7 de l'état « activé » à un état « désactivé ». Cette modification est effectuée très rapidement puisque le temps de traitement de ce signal ne dépend que du calculateur de détection 13. Ainsi, quand un véhicule coupe les capteurs 9' du dispositif de détection d'entrée en station 7' disposé en entrée de station, le calculateur de détection 13 modifie d'abord l'état du port d'entrée 12 du dispositif de détection 7 disposé dans la première zone d'ouverture de porte qui lui est adjacente. Le calculateur de détection 13 utilise ensuite les signaux « masqué » émis par les capteurs 9 du dispositif de détection 7 dont les faisceaux sont coupés par le véhicule entrant pour modifier l'état du port d'entrée 12 du dispositif de détection 7 disposé dans la seconde zone d'ouverture de porte. Le processus est répété ainsi pour tous les ports d'entrée 12 de tous les dispositifs de détection de chute 7 du quai 3. Ainsi, au fur et à mesure de l'entrée du véhicule en station et de la coupure des rayons 10 des émetteurs 8, le signal « masqué » n'engendre plus l'émission d'alarmes et d'information « entrée de la station interdite ».

Cette solution présente l'avantage de diminuer drastiquement la zone d'ombre devant le train, mais nécessite en contre-partie la pose d'au moins un capteur supplémentaire en entrée de station, ou à chaque extrémité de quai si la voie est bi-directionnelle.

Pour diminuer encore la zone d'ombre devant le train, il est possible de prévoir un dispositif de détection d'entrée en station 7' dans une ou plusieurs zones supplémentaires fermées par une barrière 4, dont le fonctionnement est identique à celui précédemment décrit.

A l'arrêt, le véhicule V coupe tous les faisceaux d'ondes 10 de tous les capteurs 9 (et éventuellement 9') du quai. Tous les capteurs envoient donc le signal « masqué » à leurs ports d'entrée respectifs 12 (et éventuellement 12'). Les portes s'ouvrent dans les zones d'ouvertures de porte 5, les voyageurs descendent du véhicule et y montent.

Lorsque le véhicule V repart et quitte la station, le calculateur de détection 13 doit être informé de ce départ pour basculer les états des ports d'entrée 12 en mode « activé ». De la même manière que précédemment, le calculateur 13 peut soit obtenir l'information par le système de signalisation embarqué 16b via le moyen de communication filaire 15, soit obtenir l'information au moyen du signal « visible » envoyé par le ou les capteurs 9' du dispositif de détection d'entrée en station 7' disposés en entrée de station, qui sont les premiers à re-détecter les faisceaux 10 émis. Dans les deux cas, le calculateur de détection 13 modifie progressivement l'état de ses ports d'entrée 12 du mode « désactivé » au mode « activé » au fur et à mesure que les capteurs 9 des dispositifs de détection de chute 7 envoient le signal « visible ». Le calculateur de détection 13 est donc de nouveau en mode de surveillance et apte à détecter et déclarer une chute.

Quand un ou plusieurs capteurs 9 ou 9' est en panne et n'envoie plus de signal au calculateur de détection 13, leur état de panne est détecté au niveau du port d'entrée 12 correspondant. Le calculateur de détection 13 signifie alors au système de signalisation central 16c cette panne, qui s'affiche sur l'interface homme-machine 19 ou envoie l'information directement sur l'interface homme-machine 19. Un opérateur peut alors reconfigurer les dispositifs de détection 7 au moyen de cette interface 19, par exemple en demandant au calculateur de détection 13 de ne considérer que les informations envoyées par certains capteurs, dans un mode dit dégradé. Ceci permet de continuer la détection de chute et l'émission d'alarmes en attendant le remplacement des éléments défectueux.

Le dispositif de prévention et de détection de chute 1 selon l'invention présente de nombreux avantages. Tout d'abord, c'est un dispositif simple dont aucun organe n'est mobile, ce qui simplifie la maintenance. Ensuite, il prévient les chutes sur une grande partie du quai et, dans les zones d'ouvertures de porte 5, il est capable de détecter une chute et de la déclarer à un coût bien moindre que les solutions de l'état de la technique, puisqu'il utilise bien moins d'équipements. Enfin, ce dispositif reste efficace même quand le véhicule entre en station.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre des revendications annexées.

## Revendications

1. Dispositif de prévention et de détection (1) de la chute d'un objet ou d'une personne sur une voie (2) d'une station ferroviaire comportant un quai (3), comprenant au moins un dispositif de détection (7) comportant au moins un émetteur (8) d'un rayon (10) et un capteur (9) apte à détecter ce rayon (10), et un calculateur de détection (13) pour traiter les signaux issus des capteurs (9) et apte à communiquer en sécurité avec au moins un système de signalisation (16a, 16b, 16c) de la station, **caractérisé en ce que** le dispositif (1) comprend des barrières (4) aptes à être disposées sur le quai (3) pour la prévention des chutes, les barrières (4) délimitant entre elles des zones d'ouvertures de porte (5), un dispositif de détection (7) étant disposé dans chacune d'entre elles pour détecter une chute sur la voie (2).

2. Dispositif (1) selon la revendication 1, **caractérisé en ce que** les sorties des capteurs (9) sont connectées à au moins un port d'entrée (12) du calculateur de détection (13), qui est soit dans un état « activé » dans lequel les signaux issus des capteurs (9) sont traités, soit dans un état « désactivé » dans lequel les signaux issus des capteurs (9) ne sont pas traités.

3. Dispositif (1) selon la revendication 1 ou 2, **caractérisé en ce qu'**il comprend au moins un dispositif de détection d'entrée en station (7') apte à être disposé dans au moins une zone du quai (3) fermée par une barrière (4).

4. Dispositif (1) selon la revendication 3, **caractérisé en ce que** le dispositif de détection d'entrée en station (7') comprend au moins un émetteur (8') d'un rayon (10) et une pluralité de capteurs (9) aptes à détecter ce rayon (10), les capteurs (9) étant disposés sur au moins toute la longueur de la zone d'ouverture de portes (5).

5. Dispositif (1) selon la revendication 4, **caractérisé en ce que** les sorties des capteurs (9') du dispositif de détection d'entrée en station (7') sont connectées à au moins un port d'entrée (12') du calculateur de détection (13).

6. Dispositif (1) selon la revendication 5, **caractérisé en ce que** le calculateur de détection (13) est apte à traiter le signal issu des capteurs (9') du dispositif de détection d'entrée en station (7') pour modifier l'état du port d'entrée (12).

7. Dispositif (1) selon la revendication 1 ou 2, **caractérisé en ce que** le calculateur de détection (13) est apte à traiter une information sur la position d'un véhicule (V) circulant sur la voie (2) pour modifier l'état du port d'entrée (12).

8. Dispositif (1) selon la revendication 6 ou 7, **caractérisé en ce que** le calculateur de détection (13) est apte à interdire ou autoriser l'entrée en station d'un véhicule (V) en fonction de l'état du port d'entrée (12) et des signaux émis par les capteurs (9) du dispositif de détection de chute (7), au moyen d'une information envoyée au système de signalisation (16a, 16b, 16c).

9. Dispositif (1) selon l'une des revendications précédentes, **caractérisé en ce que** le calculateur de détection (13) est connecté à un dispositif de contrôle de l'alimentation en énergie (20) de la station et apte à ordonner la coupure de l'alimentation en énergie de la station en fonction de l'état du port d'entrée (12) et des signaux émis par les capteurs (9) du dispositif de détection de chute (7), au moyen d'une information envoyée audit dispositif de contrôle de l'alimentation en énergie (20).

10. Procédé de détection de la chute d'un objet ou d'une personne sur une voie (2) d'une station ferroviaire comportant un quai (3) comprenant un dispositif de prévention et de détection (1) selon l'une des revendications 1 à 9, comprenant les étapes consistant à
- détecter la coupure d'au moins un rayon (10) d'au moins un dispositif de détection de chute (7),
- émettre en sécurité une information d'interdiction d'entrée en station à au moins un système de signalisation à la voie ou embarqué (16a, 16b),
- envoyer une alarme à un système de signalisation central (16c).

11. Procédé selon la revendication 10, comprenant en outre une étape de coupure de l'alimentation en énergie de la station.

12. Procédé selon la revendication 10 ou 11, comprenant une étape de détection de l'approche d'un véhicule (V) de la station.

13. Procédé selon la revendication 12, dans lequel le calculateur de détection (13) modifie l'état des ports d'entrée (12) quand l'approche d'un véhicule (V) est détecté, de manière à ne plus traiter les signaux de coupure d'au moins un rayon (10) émis par au moins un capteur (9) du dispositif de détection de chute (7).

## Claims

1. Device (1) for preventing and detecting an object or a person falling onto a track (2) of a rail transport station including a platform (3), comprising at least one detection device (7) including at least one emitter (8) of a ray (10) and a sensor (9) able to detect this ray (10), and a detection computer (13) for processing the signals from the sensors (9) and able to communicate securely with at least one signalling system (16a, 16b, 16c) of the station, **characterized in that** the device (1) comprises barriers (4) that can be disposed on the platform (3) to prevent falls, the barriers (4) delimiting between them door opening areas (5), a detection device (7) being disposed in each of them to detect a fall onto the track (2).

2. Device (1) according to Claim 1, **characterized in that** the outputs of the sensors (9) are connected to at least one input port (12) of the detection computer (13), which is either in an "activated" in which the signals from the sensors (9) are processed or in a "deactivated" state in which the signals from the sensors (9) are not processed.

3. Device (1) according to Claim 1 or 2, **characterized in that** it comprises at least one station entry detection device (7') that can be disposed in at least one area of the platform (3) closed by a barrier (4).

4. Device (1) according to Claim 3, **characterized in that** the station entry detection device (7') comprises at least one emitter (8') of a ray (10) and a plurality of sensors (9) able to detect this ray (10), the sensors (9) being disposed at least over the whole length of the door opening area (5).

5. Device (1) according to Claim 4, **characterized in that** the outputs of the sensors (9') of the station entry detection device (7') are connected to at least one input port (12') of the detection computer (13).

6. Device (1) according to Claim 5, **characterized in that** the detection computer (13) can process the signal from the sensors (9') of the station entry detection device (7') to modify the state of the input port (12).

7. Device (1) according to Claim 1 or 2, **characterized in that** the detection computer (13) is able to process information on the position of a vehicle (V) circulating on the track (2) to modify the state of the input port (12).

8. Device (1) according to Claim 6 or 7, **characterized in that** the detection computer (13) is able to prohibit or to authorize entry of a vehicle (V) into the station as a function of the state of the input port (12) and the signals emitted by the sensors (9) of the fall detection device (7) by virtue of information sent to the signalling system (16a, 16b, 16c).

9. Device (1) according to any one of the preceding claims, **characterized in that** the detection computer (13) is connected to a device (20) for controlling the supply of power to the station and able to order the cutting off of the supply of power to the station as a function of the state of the input port (12) and the signals emitted by the sensors (9) of the fall detection device (7) by virtue of information sent to said power supply control device (20).

10. Method of detection of an object or a person falling onto a track (2) of a rail transport station including a platform (3) comprising a prevention and detection device (1) according to any one of Claims 1 to 9, comprising the steps consisting in:
- detecting the breaking of at least one ray (10) of at least one fall detection device (7),
- securely transmitting station entry prohibition information to at least one trackside or onboard signalling system (16a, 16b),
- sending an alarm to a central signalling system (16c).

11. Method according to Claim 10, further comprising a step of cutting off the supply of power to the station.

12. Method according to Claim 10 or 11, comprising a step of detection of the approach of a vehicle (V) to the station.

13. Method according to Claim 12, wherein the detection computer (13) modifies the state of the input ports (12) when the approach of a vehicle (V) is detected, so as no longer to process the signals resulting from breaking of at least one ray (10) emitted at least one sensor (9) of the fall detection device (7).

## Patentansprüche

1. Vorrichtung zum Verhindern und Erfassen (1) des Sturzes eines Gegenstands oder einer Person auf ein Gleis (2) eines einen Bahnsteig (3) aufweisenden Eisenbahnbahnhofs, die mindestens eine Erfassungsvorrichtung (7), welche mindestens einen Emitter (8) eines Strahls (10) und einen Sensor (9), der diesen Strahl (10) erfassen kann, und einen Erfassungsrechner (13) aufweist, um die von den Sensoren (9) stammenden Signale zu verarbeiten, und der sicher mit mindestens einem Signalisierungssystem (16a, 16b, 16c) des Bahnhofs kommunizieren kann, **dadurch gekennzeichnet, dass** die Vorrichtung (1) Schranken (4) enthält, die auf dem Bahnsteig (3) zum Verhindern von Stürzen angeordnet werden können, wobei die Schranken (4) Türöffnungszonen (5) zwischen sich begrenzen, wobei eine Erfassungsvorrichtung (7) in jeder von ihnen angeordnet ist, um einen Sturz auf das Gleis (2) zu erfassen.

2. Vorrichtung (1) nach Anspruch 1, **dadurch gekennzeichnet, dass** die Ausgänge der Sensoren (9) mit mindestens einem Eingangsport (12) des Erfassungsrechners (13) verbunden sind, der entweder in einem «aktivierten» Zustand, in dem die von den Sensoren (9) stammenden Signale verarbeitet werden, oder in einem «deaktivierten» Zustand ist, in dem die von den Sensoren (9) stammenden Signale nicht verarbeitet werden.

3. Vorrichtung (1) nach Anspruch 1 oder 2, **dadurch gekennzeichnet, dass** sie mindestens eine Erfassungsvorrichtung der Einfahrt in den Bahnhof (7') enthält, die in mindestens einer durch eine Schranke (4) geschlossenen Zone des Bahnsteigs (3) angeordnet werden kann.

4. Vorrichtung (1) nach Anspruch 3, **dadurch gekennzeichnet, dass** die Erfassungsvorrichtung der Einfahrt in den Bahnhof (7') mindestens einen Emitter (8') eines Strahls (10) und eine Vielzahl von Sensoren (9) enthält, die diesen Strahl (10) erfassen können, wobei die Sensoren (9) über mindestens die ganze Länge der Türöffnungszone (5) angeordnet sind.

5. Vorrichtung (1) nach Anspruch 4, **dadurch gekennzeichnet, dass** die Ausgänge der Sensoren (9') der Erfassungsvorrichtung der Einfahrt in den Bahnhof (7') mit mindestens einem Eingangsport (12') des Erfassungsrechners (13) verbunden sind.

6. Vorrichtung (1) nach Anspruch 5, **dadurch gekennzeichnet, dass** der Erfassungsrechner (13) das von den Sensoren (9') der Erfassungsvorrichtung der Einfahrt in den Bahnhof (7') stammende Signal verarbeiten kann, um den Zustand des Eingangsports (12) zu verändern.

7. Vorrichtung (1) nach Anspruch 1 oder 2, **dadurch gekennzeichnet, dass** der Erfassungsrechner (13) eine Information über die Position eines auf dem Gleis (2) fahrenden Fahrzeugs (V) verarbeiten kann, um den Zustand des Eingangsports (12) zu verändern.

8. Vorrichtung (1) nach Anspruch 6 oder 7, **dadurch gekennzeichnet, dass** der Erfassungsrechner (13) die Einfahrt in den Bahnhof eines Fahrzeugs (V) abhängig vom Zustand des Eingangsports (12) und den von den Sensoren (9) der Sturzerfassungsvorrichtung (7) gesendeten Signalen mittels einer an das Signalisierungssystem (16a, 16b, 16c) gesendeten Information verbieten oder erlauben kann.

9. Vorrichtung (1) nach einem der vorhergehenden Ansprüche, **dadurch gekennzeichnet, dass** der Erfassungsrechner (13) mit einer Vorrichtung zur Steuerung der Energieversorgung (20) des Bahnhofs verbunden ist und die Unterbrechung der Energieversorgung des Bahnhofs abhängig vom Zustand des Eingangsports (12) und von den von den Sensoren (9) der Sturzerfassungsvorrichtung (7) gesendeten Signalen mittels einer an die Vorrichtung zur Steuerung der Energieversorgung (20) gesendeten Information befehlen kann.

10. Verfahren zur Erfassung des Sturzes eines Gegenstands oder einer Person auf ein Gleis (2) eines einen Bahnsteig (3) aufweisenden Eisenbahnbahnhofs, der eine Vorrichtung zum Verhindern und Erfassen (1) nach mindestens einem der Ansprüche 1 bis 9 enthält, das die Schritte enthält, die darin bestehen
- die Unterbrechung mindestens eines Strahls (10) mindestens einer Sturzerfassungsvorrichtung (7) zu erfassen,
- sicher eine Information des Verbietens der Einfahrt in den Bahnhof an mindestens ein Signalisierungssystem am Gleis oder an Bord des Fahrzeugs (16a, 16b) zu senden,
- einen Alarm an ein zentrales Signalisierungssystem (16c) zu schicken.

11. Verfahren nach Anspruch 10, das außerdem einen Schritt der Unterbrechung der Energieversorgung des Bahnhofs enthält.

12. Verfahren nach Anspruch 10 oder 11, das einen Schritt der Erfassung der Herannahens eines Fahrzeugs (V) an den Bahnhof enthält.

13. Verfahren nach Anspruch 12, bei dem der Erfassungsrechner (13) den Zustand der Eingangsports (12) ändert, wenn das Herannahen eines Fahrzeugs (V) erfasst wird, um die Unterbrechungssignale mindestens eines Strahls (10), der von mindestens einem Sensor (9) der Sturzerfassungsvorrichtung (7) gesendet wird, nicht mehr zu verarbeiten.
